# FASCICULE DE BREVET EUROPEEN

(11) **EP 3 819 184 B1**
(45) Date de publication et mention de la délivrance du brevet: **24.05.2023**
(21) Numéro de dépôt: 20205878.0
(22) Date de dépôt: 05.11.2020
(51) Int. Cl.: B61D 1/04, B61D 33/00, B61C 17/04, B60N 2/14

(54) **VÉHICULE À CABINE DE CONDUCTEUR À ROTATION**
FAHRZEUG MIT DREHBARER FAHRERKABINE
VEHICLE WITH ROTATING DRIVER'S CAB

(30) Priorité: 07.11.2019 FR 1912512
(43) Date de publication de la demande: 12.05.2021
(73) Titulaire: ALSTOM Transport Technologies, 93400 Saint-Ouen (FR)
(72) Inventeur: VITTE, Jean-Christophe, 70400 CHAGEY (FR); JEANBLANC, Patrick, 90300 SERMAMAGNY (FR); HEIDET, Arnaud, 90000 BELFORT (FR)
(74) Mandataire: Lavoix

(56) Documents cités:
- EP-A1- 2 481 653
- EP-A1- 2 832 618
- FR-A1- 2 531 116
- US-A1- 2006 061 177
- US-A1- 2016 001 786

## Description

La présente invention concerne un véhicule comprenant une cabine de conducteur comprenant une base et un siège, le véhicule présentant une direction longitudinale, la base présentant un centre et un plan longitudinal central, le plan longitudinal central s'étendant selon la direction longitudinale et passant par le centre de la base, une projection du siège selon une direction d'élévation sur la base étant incluse dans la base ; un ensemble comprenant la base et le siège étant apte à entrer en rotation par rapport à une carrosserie du véhicule autour d'un premier axe, le premier axe s'étendant selon une direction d'élévation.

FR 2 531 116 A1 décrit une machine roulante à poste de conduite pivotant. Le porte de conduite est porté par une plateforme montée de façon à pouvoir pivoter autour d'un axe vertical d'un angle pouvant varier de 0 à 360°.

GB 1420373 décrit un véhicule comprenant une cabine de conducteur comprenant un siège, une station de contrôle et un bras déplaçable, le siège et la station de contrôle étant montés sur le bras. Le bras est apte à déplacer en rotation le siège et la station de contrôle entre différentes positions dans la cabine.

Une telle cabine de conducteur permet donc d'avoir deux sens de vision du conducteur. Cela est notamment utile dans des locomotives de manoeuvre et de travaux, le conducteur pouvant modifier le sens de la cabine selon la manoeuvre et/ou l'emplacement de la manoeuvre à effectuer.

Cependant, une telle cabine n'offre pas une visibilité optimale. La cabine limite ainsi la visibilité à un des côtés de la voie : en particulier, les signaux du côté opposé de la voie ne sont pas optimalement visibles.

Un but de l'invention est donc de proposer un véhicule comprenant une cabine ayant une visibilité optimale.

A cet effet, l'invention a pour objet un véhicule selon la revendication 1.

Le siège est apte à être entraîné en rotation de manière à offrir deux sens de vision du conducteur. Lorsque le siège est entraîné en rotation autour du premier axe de rotation, l'emplacement du siège par rapport à la base est conservé, de sorte que la visibilité est maintenue dans les deux sens de vision.

Le véhicule peut en outre présenter une ou plusieurs des caractéristiques ci-dessous, considérée(s) individuellement ou selon toutes les combinaisons techniquement possibles :
le plan longitudinal central délimite un premier côté de la base et un deuxième côté de la base, le plan médian du siège étant situé du premier côté de la base dans au moins une des configurations de conduite de la cabine et du deuxième côté de la base dans au moins une autre des configurations de conduite de la cabine ;
l'ensemble est déplaçable entre au moins une position avant et une position arrière, l'ensemble étant déplacé en rotation d'un angle égal à 180° autour du premier axe entre la position avant et la position arrière ;
l'ensemble est apte à entrer en rotation autour du premier axe sur une amplitude angulaire inférieure ou égale à 270° ;
le siège est apte à entrer en rotation par rapport à la base autour d'un deuxième axe, le deuxième axe s'étendant selon la direction d'élévation, le deuxième axe étant distinct du premier axe ;
la base comprend une plateforme, le siège reposant sur la plateforme par un système de roulement secondaire, le système de roulement secondaire comprenant au moins un organe de verrouillage du système de roulement secondaire dans au moins deux positions du siège par rapport à la plateforme ;
le siège est apte à entrer en rotation autour du deuxième axe sur une amplitude angulaire égale à 90° ;
la base repose sur un support fixe par rapport à la carrosserie selon la direction d'élévation, la base reposant sur le support par un système de roulement, le système de roulement comprenant au moins un organe de verrouillage du système de roulement dans au moins une position de la base par rapport au support ;
la cabine comprend un pupitre, le pupitre étant agencé pour être fixe par rapport au siège.

D'autres caractéristiques et avantages de l'invention apparaîtront à la lecture de la description qui suit de modes de réalisation de l'invention, donnée à titre d'exemple uniquement et en référence aux dessins dans lesquels :
- [Fig 1] [Fig 2] les figures 1 et 2 sont des vues schématiques d'une voiture d'un véhicule selon un premier mode de réalisation de l'invention, comprenant une cabine représentée dans deux positions différentes, et
- [Fig 3] [Fig 4] [Fig 5] [Fig 6] les figures 3, 4, 5 et 6 sont des vues schématiques d'une voiture d'un véhicule selon un deuxième mode de réalisation de l'invention, comprenant une cabine représentée dans diverses positions.

On définit une direction longitudinale, une direction transversale et une direction d'élévation usuellement par rapport à un véhicule. La direction longitudinale X est la direction de déplacement normale du véhicule. La direction d'élévation Z est perpendiculaire au plan de roulement du véhicule. La direction transversale Y est perpendiculaire aux directions longitudinale X et d'élévation Z.

On définit arbitrairement un côté avant et un côté arrière du véhicule par rapport à la direction longitudinale X.

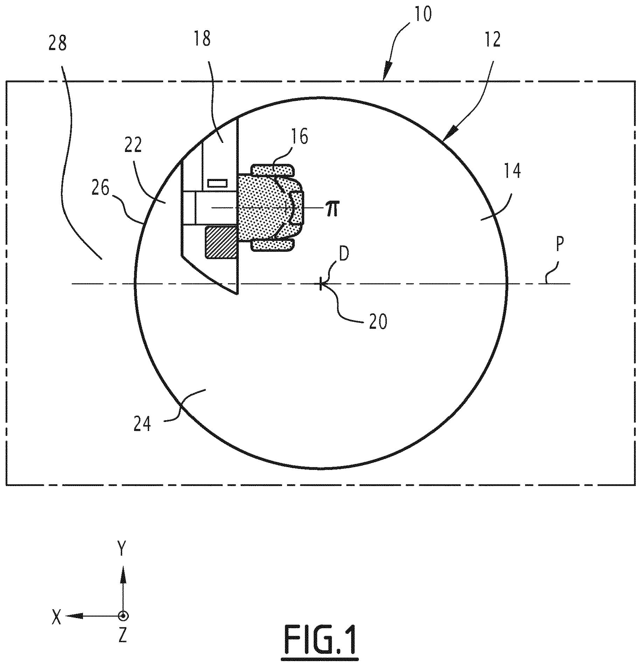

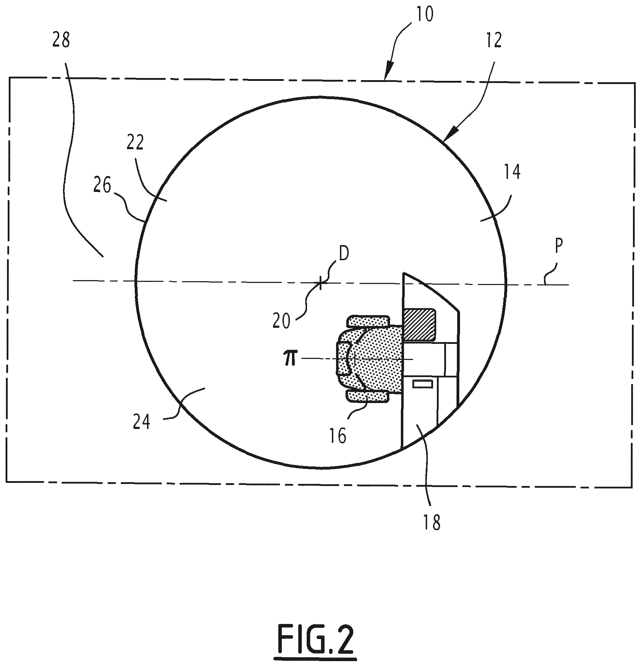

Une voiture 10 d'un véhicule selon un premier mode de réalisation de l'invention est représentée sur les figures 1 et 2.

La voiture 10 comprend une cabine 12 de conducteur comprenant une base 14 et un siège 16.

La cabine 12 comprend en outre un pupitre 18.

La base présente un centre 20, plus particulièrement un centre géométrique, et un plan longitudinal central P.

Le plan longitudinal central P est défini comme le plan s'étendant selon la direction longitudinale X et passant par le centre 20 de la base14.

Le plan longitudinal central P délimite un premier côté 22 de la base 14 et un deuxième côté 24 de la base 14.

La base comprend, ici est constituée d', une plateforme 26.

La plateforme 26 est de forme circulaire, le centre géométrique 20 de la base 14 étant le centre du cercle formé par la plateforme 26.

La base 14 est apte à entrer en rotation par rapport à la carrosserie de la voiture 10 selon un premier axe D.

Le premier axe D s'étend selon la direction d'élévation Z.

Le premier axe D passe par le centre 20 de la base 14.

La base 14 est apte à entrer en rotation autour du premier axe D par rapport au support 28 sur une amplitude angulaire.

L'amplitude angulaire de la base 14 par rapport au support 28 est supérieure ou égale à 180°.

L'amplitude angulaire de la base 14 par rapport au support 28 est inférieure ou égale à 270°.

L'amplitude angulaire de la base 14 par rapport au support 28 est ici sensiblement égale à 180°. On entend par « sensiblement égale » un écart inférieur à 5°.

La base 14 est apte à être déplacée autour du premier axe D entre deux positions par rapport au support 28, représentées sur les figures 1 et 2 et appelées arbitrairement position avant et position arrière.

La position arrière correspond à une rotation de 180° autour du premier axe de la base 14 par rapport au support 28 depuis la position avant.

La base 14, ici la plateforme 26, repose sur un support fixe 28 selon la direction d'élévation Z. Le support 28 est fixe par rapport à une carrosserie de la voiture 10.

La base 14 repose sur le support 28 par un système de roulement (non représenté), de manière à permettre une rotation de la base 14 par rapport au support 28.

Le système de roulement comprend un organe de guidage, par exemple, un palier, un roulement à billes et/ou un roulement à rouleaux.

Le système de roulement est, par exemple, graissé de manière à favoriser la rotation de la base 14 par rapport au support 28.

Le système de roulement comprend ici un actionneur prévu pour contrôler la rotation autour du premier axe D. L'actionneur est actionnable et/ou contrôlable à distance, par exemple, par un conducteur utilisant la cabine.

Le passage de la position arrière à la position avant est réalisé par une rotation selon un sens donné entre le sens trigonométrique et le sens horaire, le passage de la position avant à la position arrière étant réalisé dans le sens inverse.

Cela permet notamment de limiter l'enroulement sur eux-mêmes d'éventuels câbles passant entre le support 28 et la base 14.

Le système de roulement comprend en outre au moins un organe de verrouillage (non représenté) du système de roulement dans au moins deux positions de la base 14 par rapport au support 28, plus particulièrement dans la position avant et la position arrière.

L'organe de verrouillage comprend un élément en saillie escamotable et deux empreintes correspondantes.

L'élément en saillie escamotable est porté par l'un de la base 14 ou du support 28. Il est déplaçable entre une position externe dans laquelle l'élément s'étend en saillie depuis l'un de la base ou du support en direction de l'autre de la base ou du support et une position escamotée dans laquelle l'élément est au moins partiellement escamoté dans l'un de la base 14 ou du support 28 par rapport à la position externe, c'est-à-dire que la dimension de la partie en saillie de l'élément en saillie escamotable dans la position escamotée est inférieure à la dimension de la partie en saillie de l'élément en saillie escamotable dans la position externe.

Les deux empreintes correspondantes sont agencées à 180° l'une par rapport à l'autre par rapport au premier axe D.

L'élément en saillie escamotable est configuré pour interagir avec, plus particulièrement s'insérer dans, l'une des empreintes lorsque la base 14 est dans la position avant et avec l'autre des empreintes lorsque la base 14 est dans la position arrière, de manière à bloquer la rotation de la base 14 par rapport au support 28.

L'organe de verrouillage comprend un actionneur (non représenté) apte à escamoter l'élément en saillie escamotable, notamment pendant une rotation de la base 14 par rapport au support 28, de manière à permettre ladite rotation.

Le siège 16 est solidaire de la base 14 en rotation autour du premier axe D. Ainsi, lorsque la base 14 entre en rotation autour du premier axe D, le siège 16 est également entraîné en rotation autour du premier axe D.

La projection du siège 16 selon la direction d'élévation Z sur la base est incluse dans la base 14. Cela permet notamment de limiter l'encombrement de la cabine en dehors de la base 14.

Le siège 16 présente un plan médian π.

Dans la position avant et dans la position arrière de la base 14, le plan médian π est parallèle au plan longitudinal central P et espacé du plan longitudinal central P d'une distance supérieure à 0,75 m, plus particulièrement comprise entre 075 m et 1, 25 m.

Le plan médian π du siège 16 est situé du premier côté 22 de la base dans la position avant de la base 14 et du deuxième côté 24 de la base 14 dans la position arrière de la base 14.

Dans l'exemple représenté, le siège 16 est situé en dehors du plan longitudinal central P dans la position avant et dans la position arrière de la base, c'est-à-dire que le plan longitudinal central P ne coupe pas le siège 16.

Le siège 16 est ici situé au droit du premier côté 22 selon la direction d'élévation Z dans la position avant de la base 14 et au droit du deuxième côté 24 selon la direction d'élévation Z dans la position arrière de la base 14. On entend par là que la projection du siège selon la direction d'élévation sur la base est incluse dans le premier ou le deuxième côté de la base 14 respectivement.

Cela permet que le siège soit situé d'un côté de conduite donné, par exemple, adapté au pays dans lequel le véhicule est destiné à circuler.

Le siège est agencé tel que, dans la position avant de la base 14, un conducteur assis dans le siège 16 ait une visibilité optimale du côté avant selon la direction longitudinale X et que, dans la position arrière, le conducteur ait une visibilité optimale du côté arrière selon la direction longitudinale X.

Cela permet ainsi d'avoir deux sens de conduite sur un même véhicule.

Plus particulièrement, le siège 16 est agencé pour maintenir le conducteur tel que son plan sagittal s'étend selon la direction longitudinale X dans la position avant et la position arrière.

Le pupitre 18 est prévu pour commander des actions ou des manoeuvres du véhicule depuis la cabine.

Le pupitre 18 comprend par exemple au moins une commande pour contrôler la position de la base par rapport à la voiture 10.

Le pupitre 18 s'étend face au siège 16, de sorte qu'un utilisateur assis dans le siège 16 est apte à utiliser le pupitre, par exemple, pour commander des manoeuvres.

La projection du pupitre 18 selon la direction d'élévation Z sur la base 14 est incluse dans la base 14. Cela permet notamment de limiter l'encombrement de la cabine en dehors de la base 14.

Le pupitre 18 est solidaire de la base 14 en rotation autour du premier axe D. Ainsi, lorsque la base 14 entre en rotation autour du premier axe D, le pupitre 18 est également entraîné en rotation autour du premier axe D.

Ainsi, l'ensemble formé de la base 14, du siège 16 et ici du pupitre 18 est déplaçable en rotation autour du premier axe D, le siège 16 et ici le pupitre 18 étant prévus pour être entraînés en rotation par la base 14 autour du premier axe D.

L'ensemble est ainsi déplaçable entre une position avant et une position arrière, l'ensemble étant déplacé en rotation d'un angle égal à 180° autour du premier axe D entre la position avant et la position arrière. La position avant, respectivement arrière, de l'ensemble correspond à la position de l'ensemble lorsque la base est en position avant, respectivement arrière.

On entend ici par « égal » un écart inférieur à 5°.

Une méthode d'utilisation d'une cabine 12 telle que décrit précédemment va maintenant être décrite.

La cabine 12 présente deux configurations de conduite correspondant aux positions avant et arrière de l'ensemble formé de la base 14, du siège 16 et du pupitre 18.

La cabine 12 est placée initialement dans l'une des configurations de conduite.

Lorsque souhaité, la cabine est déplacée dans l'autre des configurations de conduite.

Plus particulièrement, l'élément en saillie escamotable est déplacé de la position externe à la position escamotable.

L'actionneur est activé, par exemple, depuis le pupitre par le conducteur.

La base 14, et ainsi le siège 16 et le pupitre 18, réalisent une rotation de 180° autour du premier axe D par rapport à la voiture.

La base 14, le siège 16 et le pupitre 18 sont déplacés dans l'autre des positions avant ou arrière.

L'élément en saillie escamotable est alors déplacé de la position escamotable à la position externe.

Ainsi, le sens de vision de l'utilisateur placé dans le siège 16 est modifié, ce qui lui permet une visibilité adaptée à la manoeuvre ou opération en cours.

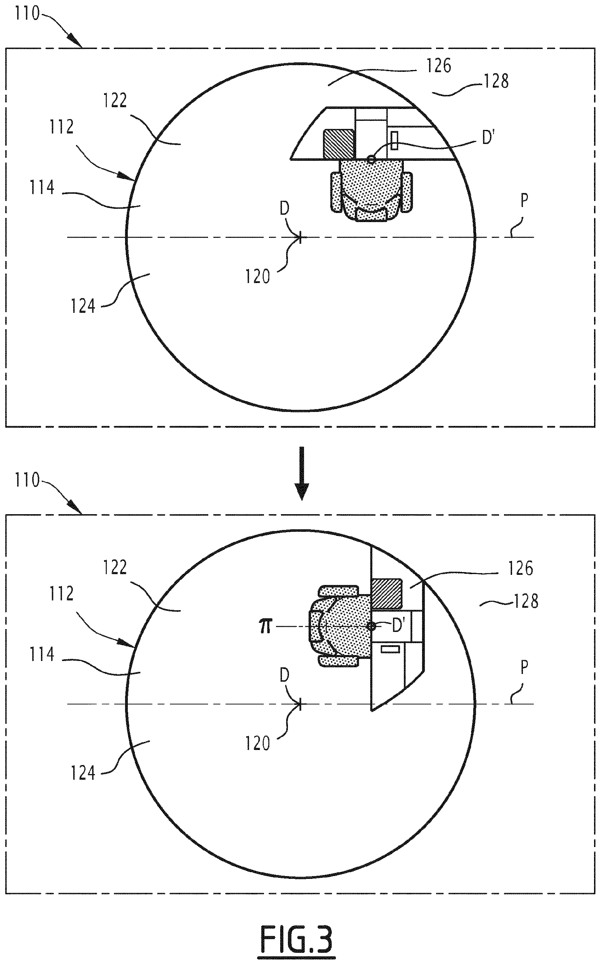

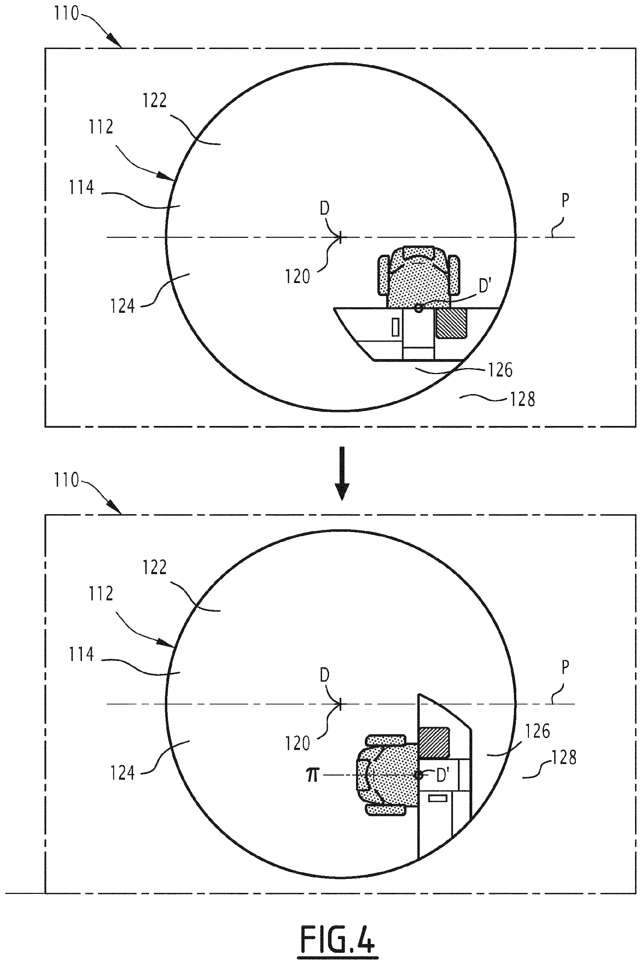

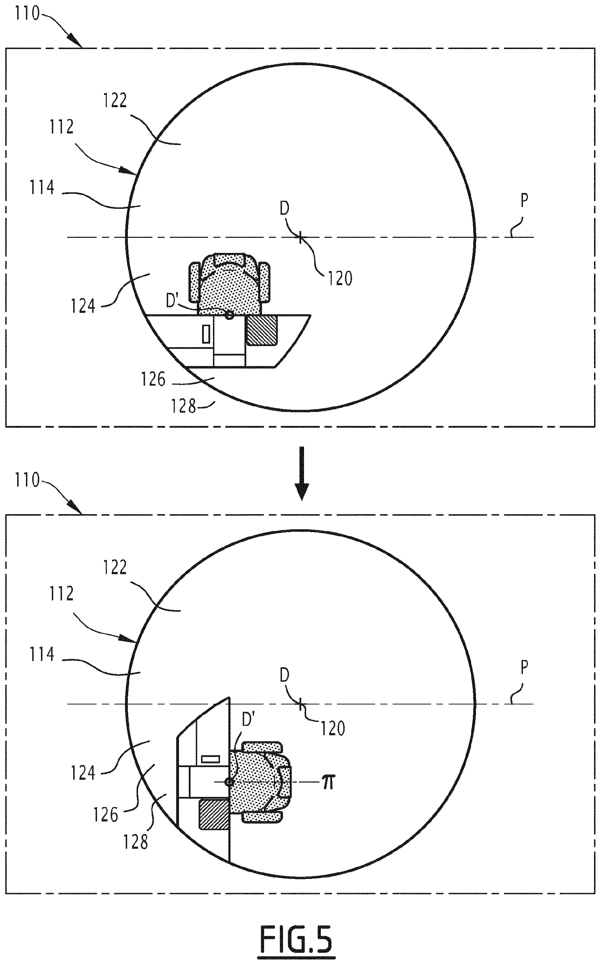

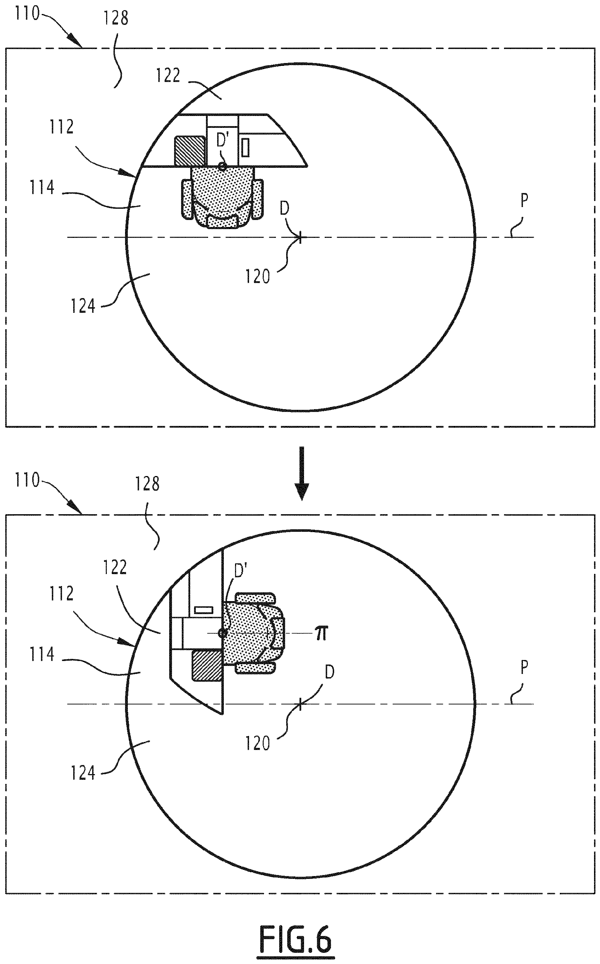

Un deuxième mode de réalisation d'un véhicule selon l'invention va maintenant être décrit en regard des figures 3 à 6.

Les éléments identiques ou similaires sont numérotés avec la même référence incrémentée de 100.

Seuls les éléments par lequel ce deuxième mode de réalisation diffère du premier mode de réalisation vont maintenant être décrits.

L'amplitude angulaire de la base 114 par rapport au support 128 est ici égale à 270°.

La base 114 est apte à être déplacée autour du premier axe D entre quatre positions par rapport à la carrosserie de la voiture, représentées sur les figures 3, 4, 5 et 6 et appelées arbitrairement respectivement position arrière gauche, position arrière droite, position avant gauche et position avant droite.

Les positions arrière gauche, arrière droite, avant gauche et avant droite correspondent à des rotations successives de 90°, ici à 5° près, dans un même sens autour du premier axe.

Le passage d'une position à la position adjacente est réalisable par rotation de 90° dans un sens autour du premier axe et/ou par rotation de 270° dans le sens inverse autour du premier axe selon l'amplitude angulaire.

Le système de roulement comprend au moins un organe de verrouillage du système de roulement dans les positions arrière gauche, arrière droite, avant gauche, avant droite de la base 114 par rapport au support 128.

L'organe de verrouillage comprend un élément en saillie escamotable et quatre empreintes correspondantes.

Les quatre empreintes correspondantes sont agencées à 90° les unes par rapport aux autres par rapport au premier axe D.

L'élément en saillie escamotable est configuré pour interagir avec, plus particulièrement s'insérer dans, l'une des empreintes respectives lorsque la base 114 est dans chacune des positions arrière gauche, arrière droite, avant gauche et avant droite.

Le siège 116, et ici le pupitre 118, sont en outre aptes à entrer en rotation par rapport à la base 114 autour d'un deuxième axe D', le deuxième axe D' étant distinct du premier axe D.

Le siège 116 et le pupitre 118 sont solidaires en rotation autour du deuxième axe D4.

Le deuxième axe D' s'étend selon la direction d'élévation Z.

L'intersection entre la base 114 et le deuxième axe D' est un point situé sur un diamètre de la base 114, le diamètre formant un angle de 45° avec les directions longitudinale X et transversale Y dans chacune des positions de la base 114 par rapport à la carrosserie.

Le deuxième axe D' présente une intersection non nulle avec le siège 116 et ici le pupitre 118. Plus particulièrement, le deuxième axe D' coupe le pupitre 118 au niveau d'un bord du pupitre 118 faisant face au siège 116.

Le siège est apte à entrer en rotation autour du deuxième axe D' sur une amplitude angulaire égale à 90°, ici à 5° près.

Le siège est apte à être déplacé en rotation autour du deuxième axe D' entre une position de base et une position complémentaire.

La position complémentaire correspond à une rotation de 90°, ici à 5° près, autour du deuxième axe D' du siège 116 par rapport à la base 114 depuis la position de base.

Dans le présent mode de réalisation, le siège 116, et ici le pupitre 118, reposent sur la base 114 par un système de roulement secondaire (non visible sur les figures).

Plus particulièrement, le siège 116, et ici le pupitre 118, sont solidaires en rotation d'une sous-plateforme, le deuxième axe D' passant par un centre, ici le centre géométrique, de la sous-plateforme.

La sous-plateforme a ici une forme circulaire.

La sous-plateforme est découpée dans la plateforme, de sorte que la sous-plateforme et la plateforme forment ensemble un disque.

La sous-plateforme présente une surface supérieure affleurant avec la surface supérieure de la plateforme.

La sous-plateforme repose sur la plateforme 126 par le système de roulement secondaire.

Le système de roulement comprend un actionneur prévu pour contrôler la rotation autour du deuxième axe D'. L'actionneur est actionnable et/ou contrôlable à distance, par exemple, par un conducteur utilisant la cabine.

Le passage de la position de base à la position complémentaire est réalisé par une rotation selon un sens donné entre le sens trigonométrique et le sens horaire, le passage de la position complémentaire à la position de base étant réalisé dans le sens inverse.

Cela permet notamment de limiter l'enroulement sur eux-mêmes d'éventuels câbles passant entre la base 114 et le siège 116 et/ou le pupitre 118.

Le système de roulement secondaire comprend en outre au moins un organe de verrouillage du système de roulement secondaire dans au moins deux positions du siège, et ici du pupitre, par rapport à la base 114, plus particulièrement dans la position de base et la position complémentaire.

L'organe de verrouillage comprend un élément en saillie escamotable et deux empreintes correspondantes.

L'élément en saillie escamotable est porté par l'un de la base 114 ou de la sous-plateforme. Il est déplaçable entre une position externe dans laquelle l'élément s'étend en saillie depuis l'un de la base ou du support en direction de l'autre de la base ou du support et une position escamotée dans laquelle l'élément est au moins partiellement escamoté dans l'un de la base 114 ou de la sous-plateforme par rapport à la position externe, c'est-à-dire que la dimension de la partie en saillie de l'élément en saillie escamotable dans la position escamotée est inférieure à la dimension de la partie en saillie de l'élément en saillie escamotable dans la position externe.

Les deux empreintes correspondantes sont agencées à 90°, ici à 5° près ; l'une par rapport à l'autre par rapport au deuxième axe D'.

L'élément en saillie escamotable est configuré pour interagir avec, plus particulièrement s'insérer dans, l'une des empreintes lorsque le siège 116 est dans la position de base et avec l'autre des empreintes lorsque le siège 116 est dans la position complémentaire.

L'organe de verrouillage comprend un actionneur (non représenté) apte à escamoter l'élément en saillie escamotable, notamment pendant une rotation du siège 116 par rapport à la base 114, de manière à permettre ladite rotation.

Une méthode d'utilisation d'une cabine selon ce deuxième mode de réalisation va maintenant être décrite.

La cabine 112 présente quatre configurations de conduite, chaque configuration de conduite correspondant à une position respective de l'ensemble formé de la base 114, du siège 116 et du pupitre 118 parmi l'une des positions arrière gauche, arrière droite, avant gauche et avant droite.

Dans chaque configuration de conduite de la cabine 112, le siège 116 et le pupitre 118 sont dans l'une des positions de base et complémentaire telle que le siège 116 est agencé tel que le plan sagittal d'un utilisateur dans le siège 116 s'étend selon la direction longitudinale X.

Plus particulièrement, si l'ensemble est en position avant droite ou en position arrière droite, le siège 116 est dans la position de base par rapport à la base 114, et si l'ensemble est en position avant gauche ou en position arrière gauche, le siège 116 est dans la position complémentaire par rapport à la base 114.

Dans chaque configuration de conduite de la cabine 112, le plan médian π du siège 116 est parallèle au plan longitudinal central P et espacé du plan longitudinal central P d'une distance supérieure à 0,75 m, plus particulièrement comprise entre 0,75 m et 1,25m.

La cabine 112 est initialement placée dans l'une des configurations de conduite.

Si un utilisateur souhaite changer le sens de vision du conducteur par rapport à la direction longitudinale X sans changer le côté de conduite par rapport à une voie, c'est-à-dire passer de la position arrière gauche de la base 114 à la position avant gauche ou inversement ou de la position arrière droite à la position avant droite ou inversement, l'ensemble formé de la base 114, du siège 116 et du pupitre 118 est déplacé en rotation de 180° autour du premier axe D.

La cabine 112 est alors déplacée dans une autre des configurations de conduite.

Cette utilisation est équivalente au premier mode de réalisation.

Si un utilisateur souhaite changer le sens de vision du conducteur par rapport à la direction longitudinale X en changeant le côté de conduite relativement à une voie, l'ensemble formé de la base 114, du siège 116 et du pupitre 118 est déplacé en rotation de 90° ou 270° autour du premier axe D selon la position finale désirée, et le siège 116 et le pupitre 118 sont déplacés en rotation par rapport à la base 114 de 90° autour du deuxième axe D'.

La cabine 112 est alors déplacée dans une autre des configurations de conduite.

La rotation autour du premier axe D est, par exemple, réalisée dans un premier temps puis la rotation autour du deuxième axe D' est réalisée dans un second temps.

Alternativement, la rotation autour du deuxième axe D' est réalisée dans un premier temps et la rotation autour du premier axe D est réalisée dans un second temps.

Alternativement, la rotation autour du premier axe D et la rotation autour du deuxième axe D' sont réalisées simultanément.

Le changement du côté de conduite relativement à un utilisateur assis dans le siège permet notamment d'adapter le poste de conduite à un changement de réseau qui permettrait une meilleure visibilité selon un côté de conduite différent, par exemple dû à un changement de pays.

Dans chacun des cas précédemment décrits, le sens de rotation autour du premier axe D est choisi relativement à l'amplitude angulaire maximale.

Plus particulièrement, l'amplitude angulaire de l'ensemble formé de la base 114, du siège 116 et du pupitre 118 par rapport à la voiture est égale à 270°, ici à 5° près, de sorte que pour passer d'une position initiale donnée à une position finale donnée, un unique sens de rotation est possible autour du premier axe D.

Cela permet notamment de limiter l'enroulement sur eux-mêmes d'éventuels câbles passant entre le support 128 et la base 114.

Pour chacune des rotations, l'élément en saillie escamotable correspondant est déplacé de la position externe à la position escamotable, l'actionneur correspondant est activé, l'ensemble de la base 114, du siège 116 et du pupitre 118 ou le siège 116 et le pupitre 118 réalise(nt) la rotation donnée, puis l'élément en saillie escamotable est déplacé de la position escamotable à la position externe.

Les différents éléments de la cabine sont donc adaptés pour être déplacés de sorte que la cabine offre deux sens possibles de vision du conducteur, en maintenant la configuration optimale de la cabine pour la voie, pour une visibilité optimale du conducteur.

Une telle cabine permet donc de faciliter des manoeuvres et prévenir d'éventuels accidents en améliorant la visibilité du conducteur.

## Revendications

1. Véhicule comprenant une cabine (12 ; 112) de conducteur comprenant une base (14 ; 114) et un siège (16 ; 116), le véhicule présentant une direction longitudinale (X),
la base (14 ; 114) présentant un centre (20 ; 120) et un plan longitudinal central (P), le plan longitudinal central (P) s'étendant selon la direction longitudinale (X) et passant par le centre (20 ; 120) de la base (14 ; 114),
la projection du siège (16 ; 116) selon une direction d'élévation (Z) sur la base (14 ; 114) étant incluse dans la base (14 ; 114) ;
un ensemble comprenant la base (14 ; 114) et le siège (16 ; 116) étant apte à entrer en rotation par rapport à une carrosserie du véhicule autour d'un premier axe (D), le premier axe (D) s'étendant selon une direction d'élévation (Z),
le premier axe (D) traversant le centre (20 ; 120) de la base (14 ; 114),
dans lequel la cabine (12 ; 112) présente au moins deux configurations de conduite, l'ensemble étant pivoté entre les configurations de conduite de la cabine (12 ; 112), le siège (16 ; 116) présentant un plan médian (π), le plan médian (π) du siège (16 ; 116) étant parallèle au plan longitudinal central (P), **caractérisé en ce que** le plan médian (π) est espacé du plan longitudinal central (P) d'une distance supérieure à 0,75 m dans chacune des configurations de conduite de la cabine (12 ; 112).

2. Véhicule selon la revendication 1, dans lequel le plan longitudinal central (P) délimite un premier côté (22 ; 122) de la base (14 ; 114) et un deuxième côté (24 ; 124) de la base (14 ; 114), le plan médian (π) du siège (16 ; 116) étant situé du premier côté (22 ; 122) de la base (14 ; 114) dans au moins une des configurations de conduite de la cabine (12 ; 112) et du deuxième côté (24 ; 124) de la base (14 ; 114) dans au moins une autre des configurations de conduite de la cabine (12 ; 112).

3. Véhicule selon la revendication 1 ou 2, dans lequel l'ensemble est déplaçable entre au moins une position avant et une position arrière, l'ensemble étant déplacé en rotation d'un angle égal à 180° autour du premier axe (D) entre la position avant et la position arrière.

4. Véhicule selon l'une quelconque des revendications 1 à 3, dans lequel l'ensemble est apte à entrer en rotation autour du premier axe (D) sur une amplitude angulaire inférieure ou égale à 270°.

5. Véhicule selon l'une quelconque des revendications 1 à 4, dans lequel le siège (16 ; 116) est apte à entrer en rotation par rapport à la base (14 ; 114) autour d'un deuxième axe (D'), le deuxième axe (D') s'étendant selon la direction d'élévation (Z), le deuxième axe (D') étant distinct du premier axe (D).

6. Véhicule selon la revendication 5, dans lequel la base (14 ; 114) comprend une plateforme (26 ; 126), le siège (16 ; 116) reposant sur la plateforme (26 ; 126) par un système de roulement secondaire, le système de roulement secondaire comprenant au moins un organe de verrouillage du système de roulement secondaire dans au moins deux positions du siège (16 ; 116) par rapport à la plateforme (26 ; 126).

7. Véhicule selon la revendication 5 ou 6, dans lequel le siège (16 ; 116) est apte à entrer en rotation autour du deuxième axe (D') sur une amplitude angulaire égale à 90°.

8. Véhicule selon l'une quelconque des revendications 1 à 7, dans lequel la base (14 ; 114) repose sur un support fixe (28 ; 128) par rapport à la carrosserie selon la direction d'élévation (Z), la base (14 ; 114) reposant sur le support (28 ; 128) par un système de roulement, le système de roulement comprenant au moins un organe de verrouillage du système de roulement dans au moins une position de la base (14 ; 114) par rapport au support (28 ; 128).

9. Véhicule selon l'une quelconque des revendications 1 à 8, dans lequel la cabine (12 ; 112) comprend un pupitre (18 ; 118), le pupitre (18 ; 118) étant agencé pour être fixe par rapport au siège (16 ; 116).

## Patentansprüche

1. Fahrzeug, umfassend eine Fahrerkabine (12; 112), umfassend eine Basis (14; 114) und einen Sitz (16; 116), wobei das Fahrzeug eine Längsrichtung (X) aufweist,
die Basis (14; 114) einen Mittelpunkt (20; 120) und eine mittlere Längsebene (P) aufweist, wobei sich die mittlere Längsebene (P) entlang der Längsrichtung (X) erstreckt und durch den Mittelpunkt (20; 120) der Basis (14; 114) verläuft,
wobei die Projektion des Sitzes (16; 116) entlang einer Erhebungsrichtung (Z) auf die Basis (14; 114) in der Basis (14; 114) beinhaltet ist;
eine Anordnung, umfassend die Basis (14; 114) und den Sitz (16; 116), die geeignet ist, um in Bezug auf eine Karosserie des Fahrzeugs um eine erste Achse (D) in Drehung versetzt zu werden, wobei sich die erste Achse (D) entlang einer Erhebungsrichtung (Z) erstreckt,
wobei die erste Achse (D) die Mitte (20; 120) der Basis (14; 114) durchquert,
wobei die Kabine (12; 112) mindestens zwei Fahrkonfigurationen aufweist, wobei die Anordnung zwischen den Fahrkonfigurationen der Kabine (12; 112) geschwenkt wird, wobei der Sitz (16; 116) eine Mittelebene aufweist, wobei die Mittelebene des Sitzes (16; 116) parallel zu der mittleren Längsebene (P) ist, **dadurch gekennzeichnet, dass** die Mittelebene in jeder der Fahrkonfigurationen der Kabine (12; 112) um einen Abstand von mehr als 0,75 m von der mittleren Längsebene (P) beabstandet ist.

2. Fahrzeug nach Anspruch 1, wobei die mittlere Längsebene (P) eine erste Seite (22; 122) der Basis (14; 114) und eine zweite Seite (24; 124) der Basis (14; 114) begrenzt, wobei sich die Mittelebene des Sitzes (16; 116) in mindestens einer der Fahrkonfigurationen der Kabine (12; 112) auf der ersten Seite (22; 122) der Basis (14; 114) und in mindestens einer anderen der Fahrkonfigurationen der Kabine (12; 112) auf der zweiten Seite (24; 124) der Basis (14; 114) befindet.

3. Fahrzeug nach Anspruch 1 oder 2, wobei die Anordnung zwischen mindestens einer vorderen und einer hinteren Position verstellbar ist, wobei die Anordnung um einen Winkel von 180° um die erste Achse (D) zwischen der vorderen und der hinteren Position gedreht wird.

4. Fahrzeug nach einem der Ansprüche 1 bis 3, wobei die Anordnung in der Lage ist, sich über einen Winkelbereich von 270° oder weniger um die erste Achse (D) zu drehen.

5. Fahrzeug nach einem der Ansprüche 1 bis 4, wobei der Sitz (16; 116) geeignet ist, um in Bezug auf die Basis (14; 114) um eine zweite Achse (D') in Drehung versetzt zu werden, wobei sich die zweite Achse (D') entlang der Erhebungsrichtung (Z) erstreckt und die zweite Achse (D') von der ersten Achse (D) verschieden ist.

6. Fahrzeug nach Anspruch 5, wobei die Basis (14; 114) eine Plattform (26; 126) umfasst, wobei der Sitz (16; 116) über ein sekundäres Rollsystem auf der Plattform (26; 126) ruht, wobei das sekundäre Rollsystem mindestens ein Verriegelungselement des sekundären Rollsystems in mindestens zwei Positionen des Sitzes (16; 116) in Bezug auf die Plattform (26; 126) umfasst.

7. Fahrzeug nach Anspruch 5 oder 6, wobei der Sitz (16; 116) über einen Winkelbereich von 90° um die zweite Achse (D') drehbar ist.

8. Fahrzeug nach einem der Ansprüche 1 bis 7, wobei die Basis (14; 114) auf einem Träger (28; 128) ruht, der in Bezug auf die Karosserie entlang der Erhebungsrichtung (Z) feststehend ist, wobei die Basis (14; 114) über ein Rollsystem auf dem Träger (28; 128) ruht, wobei das Rollsystem mindestens ein Verriegelungselement des Rollsystems in mindestens einer Position der Basis (14; 114) in Bezug auf den Träger (28; 128) umfasst.

9. Fahrzeug nach einem der Ansprüche 1 bis 8, wobei die Kabine (12; 112) ein Pult (18; 118) umfasst, wobei das Pult (18; 118) angeordnet ist, um in Bezug auf den Sitz (16; 116) feststehend zu sein.

## Claims

1. Vehicle comprising a driver's cab (12; 112) comprising a base (14; 114) and a seat (16; 116), the vehicle having a longitudinal direction (X),
the base (14; 114) having a center (20; 120) and a central longitudinal plane (P), the central longitudinal plane (P) extending in the longitudinal direction (X) and passing through the center (20; 120) of the base (14; 114),
the projection of the seat (16; 116) in an elevation direction (Z) on the base (14; 114) being comprised in the base (14; 114);
an assembly comprising the base (14; 114) and the seat (16; 116) being designed to rotate relative to a body of the vehicle about a first axis (D), the first axis (D) extending in an elevation direction (Z),
the first axis (D) passing through the center (20; 120) of the base (14; 114),
wherein the cab (12; 112) has at least two driving configurations, the assembly being rotated between the driving configurations of the cab (12; 112), the seat (16; 116) having a median plane (π), the median plane (π) of the seat (16; 116) being parallel to the central longitudinal plane (P), **characterized in that** the median plane (π) is spaced apart from the central longitudinal plane (P) by a distance greater than 0.75 m in each of the driving configurations of the cab (12; 112).

2. Vehicle according to claim 1, wherein the central longitudinal plane (P) defines a first side (22; 122) of the base (14; 114) and a second side (24; 124) of the base (14; 114), the median plane (π) of the seat (16; 116) being located on the first side (22; 122) of the base (14; 114) in at least one of the driving configurations of the cab (12; 112) and on the second side (24; 124) of the base (14; 114) in at least one other of the driving configurations of the cab (12; 112).

3. Vehicle according to claim 1 or 2, wherein the assembly is movable between at least a front position and a rear position, the assembly being rotated through an angle equal to 180° about the first axis (D) between the front position and the rear position.

4. Vehicle according to any one of claims 1 to 3, wherein the assembly is designed to rotate about the first axis (D) through an angular range less than or equal to 270°.

5. Vehicle according to any one of claims 1 to 4, wherein the seat (16; 116) is designed to rotate relative to the base (14; 114) about a second axis (D'), the second axis (D') extending in the elevation direction (Z), the second axis (D') being distinct from the first axis (D).

6. Vehicle according to claim 5, wherein the base (14; 114) comprises a platform (26; 126), the seat (16; 116) resting on the platform (26; 126) via a secondary bearing system, the secondary bearing system comprising at least one locking member of the secondary bearing system in at least two positions of the seat (16; 116) relative to the platform (26; 126).

7. Vehicle according to claim 5 or 6, wherein the seat (16; 116) is designed to rotate about the second axis (D') through an angular range equal to 90°.

8. Vehicle according to any one of claims 1 to 7, wherein the base (14; 114) rests on a fixed support (28; 128) relative to the body according to the elevation direction (Z), the base (14; 114) resting on the support (28; 128) via a bearing system, the bearing system comprising at least one locking member of the bearing system in at least one position of the base (14; 114) relative to the support (28; 128).

9. Vehicle according to any one of claims 1 to 8, wherein the cab (12; 112) comprises a console (18; 118), the console (18; 118) being disposed to be fixed relative to the seat (16). ; 116).
